# EUROPÄISCHE PATENTANMELDUNG

(11) **EP 4 789 537 A1**
(43) Veröffentlichungstag der Anmeldung: **12.08.2026**
(21) Anmeldenummer: 26154502.4
(22) Anmeldetag: 27.01.2026
(51) Int. Cl.: A01K 47/00, A01K 47/02

(54) **ANORDNUNG ZUR PRODUKTION VON WABENHONIG**

(30) Priorität: 11.02.2025 DE 102025105023
(71) Anmelder: Eggert, Lutz, 07743 Jena (DE)
(72) Erfinder: JANISCH, Walter, 8272 Hartl (AT)
(74) Vertreter: PATERIS PartmbB

(57) **Zusammenfassung**

Es wird eine Anordnung (1) zur Produktion von Wabenhonig beschrieben, welche eine Mehrzahl an Rahmen (2) und eine Fassungsvorrichtung (3) zum Aufnehmen der Mehrzahl an Rahmen (2) umfasst, wobei die Rahmen (2) jeweils eine durch den Rahmen (2) definierte Durchgangsöffnung (4) mit einer Mittelachse (5) aufweisen. Die Fassungsvorrichtung (3) umfasst eine erste Halterung (8), eine zweite Halterung (9) und mindestens ein Befestigungsmittel (10) zur lösbaren Befestigung der ersten Halterung (8) und der zweiten Halterung (9) miteinander, wobei jede der Halterungen (8, 9) eine Innenseite (11), eine Außenseite (12) und einen die Innenseite (11) und die Außenseite (12) miteinander verbindenden Rand (13) aufweist, wobei durch die Innenseite (11) ausgehend von dem Rand (13) eine Vertiefung (14) gebildet wird, welche zur Aufnahme der Mehrzahl an Rahmen (2) ausgebildet ist, wobei in einem zusammengebauten Zustand der Anordnung (1) die Innenseiten (11) der ersten Halterung (8) und der zweiten Halterung (9) einander zugewandt angeordnet sind, die Mehrzahl an Rahmen (2) zwischen der ersten Halterung (8) und der zweiten Halterung (9) angeordnet sind und die Halterungen (8, 9) lösbar miteinander befestigt sind, wobei die Ränder (13) der Halterungen (8, 9) zumindest teilweise einen Abstand (15) zueinander aufweisen.

## Beschreibung

Die vorliegende Erfindung betrifft eine Anordnung zur Produktion von Wabenhonig, insbesondere zum Positionieren in einer Bienenbeute bzw. einem lebenden Bienenvolk im Rahmen der Honigproduktion eines Imkers.

Imkerei und insbesondere Hobbyimkerei erfreut sich zunehmender Beliebtheit. Die vorliegende Erfindung adressiert spezifische Herausforderungen in der modernen Imkerei, insbesondere Probleme, die durch die Produktion von Melezitosehonig, auch bekannt als "Zementhonig", entstehen. In den Jahren 2021 und 2024 erlebten Imker signifikante Beeinträchtigungen ihrer Honigernte aufgrund der Eigenschaften dieses Honigtyps, der in den Waben des Bienenstocks zu einer festen Masse kristallisiert. Diese Konsistenz des Melezitosehonigs verhindert dessen herkömmliche Ernte, da er in den Zellen der Waben festsitzt und sich nicht durch die üblichen Methoden ernten lässt. Die herkömmlichen Bienenwaben erfordern einen erheblichen zusätzlichen Aufwand, um den Melezitosehonig zu gewinnen, was zu erhöhten Kosten für den Imker führt. Zudem leidet die Qualität des Honigs unter dem aufwendigen Prozess der Honiggewinnung, insbesondere durch den Einsatz von Wärme. Die resultierende mindere Qualität, welche z. B. über das Nachlassen der Aktivität von Enzymen - wie Invertase und Glucoseoxidase (GOX) - messbar ist, und die erhöhten Produktionskosten führen dazu, dass dieser Honig oft zu einem niedrigeren Preis verkauft wird, besonders da der Honig auch nach der Abfüllung im Glas zu kristallisieren tendiert. Ähnliche Herausforderungen bestehen bei der Ernte von Heidehonig. Die tradierte Imkerei bietet Heidehonig in Wabenstücken an. Diese werden unter hohem Aufwand aus dem bestehenden Wabenwerk herausgeschnitten.

Eine alternative Methode zur Ernte von Melezitosehonig oder Heidehonig ist das Pressen des Wabenwerks, das zuvor aus den Holzrahmen der herkömmlichen Waben im Bienenstock herausgeschnitten wird. Neben dem Pressen gibt es auch die Möglichkeit, das gesamte Wabenwerk zu erhitzen, um den Honig aus den Zellen zu extrahieren. Bei diesem Prozess wird ebenfalls das Wabenmaterial erhitzt, wodurch flüssiges Wachs und Honig entstehen, die anschließend wieder getrennt werden müssen. Beide Verfahren sind jedoch sehr aufwendig und verursachen zusätzliche Kosten sowie einen erhöhten Zeitaufwand. Zudem leiden der ursprüngliche Geschmack und Qualität des Honigs unter diesen Prozessen, was den Wert dieses Naturprodukts mindert. Diese Faktoren führen dazu, dass viele Imker davor zurückschrecken, Melezitosehonig zu ernten, und stattdessen den festen Honig in den Waben belassen, um ihn den Bienen als Futter zu geben. Allerdings eignen sich Melezitose- oder auch Heidehonig nicht als Überwinterungsfutter für Bienenvölker, da er nach dem Auskristallieren selbst für die Bienen schwer verfügbar ist. Sie benötigen, um den Honig verfügbar zu gestalten, Wasser, welches im Winter nicht gesammelt werden kann. Auch haben diese Honige einen hohen Mineralstoffgehalt. Durch den Konsum in der Ruhezeit sind die Bienen gezwungen, sich zu erleichtern. Das führt gerade im Winter dann zu einem Abkoten im Bienenstock, welches eine erhebliche Infektionsgefahr bildet und zur Schwächung des Bienenvolkes oder Darmerkrankungen führt.

Melezitosehonig bildet sich durch das Zusammenwirken von Bienen, Bäumen und Insekten wie Blattläusen, die in Waldgebieten auf Bäumen wie Lärchen, Fichten und Kiefern leben. Diese Insekten ernähren sich vom Baumsaft und scheiden überschüssigen Zucker, einschließlich Melezitose, aus, den die Bienen sammeln und zu Honig verarbeiten. Wenn der Melezitosegehalt im Honig über 10-12 % steigt, kristallisiert dieser schnell, wird hart und schwer zu verarbeiten, was die Ernte und Verarbeitung erschwert. Trotz dieser Herausforderungen ist Melezitosehonig aufgrund seines einzigartigen Geschmacks eine geschätzte Delikatesse. Dieser Honig ist reich an Antioxidantien, die das Immunsystem stärken und Entzündungen reduzieren können. Er enthält auch wichtige Vitamine und Mineralstoffe, wie Vitamin C, Kalium und Magnesium, und hat probiotische Eigenschaften, die die Darmgesundheit fördern.

Die oben beschriebenen Verfahren zur Ernte von Melezitosehonig sind für Hobbyimker oder Imker, welche Bienenzucht nur am Rande betrieben, tendenziell sehr aufwendig und vor allem zeitintensiv.

Ein weiterer Trend im Zusammenhang mit der Honigproduktion liegt in der Vermarktung von Wabenhonig. Hierfür eignet sich insbesondere der zuvor beschriebene Melezitosehonig. Beim Erwerb von Wabenhonig haben die Erwerber die Garantie, dass es sich ausschließlich um Bienenhonig handelt, welcher insbesondere nicht durch Zusätze, wie z. B. Sirup oder ähnliches, gestreckt worden ist. Der Vertrieb von Wabenhonig erfordert die Herstellung des Wabenhonigs in einem vorgegebenen geometrischen Format zum Verpacken der Waben in einer Standardverpackung. Dies stellt für Imker eine große Herausforderung dar, da der Ausbau der Waben durch die Bienen erfolgt und durch den Imker nur bedingt beeinflusst werden kann. Ein Ausbau der Waben durch die Bienen in einer Form, die den gewünschten Standardmaßen entsprechen erfordert eine präzise Ausrichtung der für den Wabenhonig verwendeten, in der Regel vergleichsweise kleinen Rähmchen, welche auch als Kassetten bezeichnet werden, in der Bienenbeute. Bereits kleine Abweichungen von einer genauen vertikalen Ausrichtung können dazu führen, dass der Ausbau durch die Bienen ungleichmäßig und/oder schief erfolgt und die Wabe für eine Vermarktung als Wabenhonig nicht geeignet ist, da sie nicht die für die Verpackung erforderliche Abmessung aufweist.

Stand der Technik im Zusammenhang mit der Herstellung von Wabenhonig wird beispielsweise in den Dokumenten EP 0 152 850 A2 und EP 4 292 428 A1 beschrieben.

Vor dem beschriebenen Hintergrund ist es Aufgabe der vorliegenden Erfindung, eine vorteilhafte Anordnung zur Produktion von Wabenhonig, insbesondere Melezitosehonig, zur Verfügung zu stellen.

Diese Aufgabe wird durch eine Anordnung zur Produktion von Wabenhonig gemäß Patentanspruch 1 gelöst. Die abhängigen Ansprüche enthalten weitere vorteilhafte Ausgestaltungen der Erfindung.

Die erfindungsgemäße Anordnung zur Produktion von Wabenhonig, welche beispielsweise zum Einspannen und/oder Einhängen in eine Bienenbeute oder mit anderen Worten in ein lebendes Bienenvolk ausgelegt sein kann, umfasst eine Mehrzahl an Rahmen, mitunter auch als Kassetten bezeichnet, und eine Fassungsvorrichtung zum Aufnehmen der Mehrzahl an Rahmen. Die Fassungsvorrichtung kann insbesondere auch zum Positionieren und/oder Fixieren der Mehrzahl an Rahmen ausgelegt sein. Die Rahmen weisen jeweils eine durch den Rahmen definierte Durchgangsöffnung mit einer Mittelachse auf.

Optional weisen die Rahmen jeweils in axialer Richtung, beispielsweise entlang des Umfangs des Rahmens, mindestens eine Vertiefung auf. Die mindestens eine Vertiefung dient zur Ausbildung eines sogenannten Bienenabstandes (bee-space), welcher erforderlich ist, damit die Bienen Zugang zum Inneren des Rahmens, also dem Raum zum Ausbau der Wabe, haben. Die Vertiefung kann als Aussparung oder Ausnehmung oder allgemein als ein Bereich des Rahmens mit im Vergleich zu einer maximalen Länge des Rahmens in axialer Richtung verminderter Länge des Rahmens ausgebildet sein. Wesentlich ist dabei, dass bei einer Aneinanderreihung der Rahmen in axialer Richtung zwischen den Rahmen Zugangsöffnungen für die Bienen gebildet werden. Die Vertiefung kann insbesondere als länglicher Schlitz ausgebildet sein, z. B. mit einer Abmessung oder Breite in axialer Richtung von zwischen 6 und 12 Millimetern, vorzugsweise 10 Millimetern.

Die Fassungsvorrichtung weist eine erste Halterung, eine zweite Halterung und mindestens ein Befestigungsmittel zur lösbaren Befestigung der ersten und der zweiten Halterung miteinander auf. Jede der Halterungen weist eine Innenseite, eine Außenseite und einen die Innenseite und die Außenseite miteinander verbindenden Rand auf. Durch die Innenseite wird ausgehend von dem Rand eine Vertiefung gebildet, welche zur Aufnahme der Mehrzahl an Rahmen ausgebildet ist. Die Vertiefung kann z. B. zur zumindest teilweise formschlüssigen und derartigen aneinandergereihten, vorzugsweise unmittelbar aneinandergereihten, Aufnahme der Mehrzahl an Rahmen ausgebildet sein, dass die Mittelachsen der Rahmen parallel zueinander verlaufen und eine Rahmenaußenoberfläche jedes Rahmens zumindest teilweise an der Innenseite der Halterung anliegt. Insbesondere kann die Rahmenaußenoberfläche eine Flächennormale aufweisen, welche senkrecht oder radial zur Mittelachse des Rahmens verläuft. Diese Ausgestaltung erleichtert eine korrekte Ausrichtung des Rahmens.

In einem zusammengebauten Zustand der Anordnung sind die Innenseite der ersten Halterung und die Innenseite der zweiten Halterung einander zugewandt, also mit anderen Worten auf einander zu gerichtet, angeordnet. Die Mehrzahl an Rahmen ist in dem zusammengebauten Zustand der Anordnung zwischen der ersten und der zweiten Halterung angeordnet, beispielsweise zwischen der ersten und der zweiten Halterung eingeklammert und/oder fixiert und/oder eingeklemmt. Weiterhin sind in dem zusammengebauten Zustand der Anordnung die Halterungen, also die erste und die zweite Halterung, lösbar miteinander befestigt, wobei die Ränder der Halterungen zumindest teilweise, also in Teilbereichen oder überall, einen Abstand zueinander aufweisen. Der Abstand dient dem Zweck, Bienen von möglichst vielen Seiten Zugang zum Inneren der Rahmen zu gewähren.

Die erfindungsgemäße Anordnung ermöglicht es, effizient und zuverlässig Wabenhonig innerhalb vorgegebener Abmessungen zu produzieren und insbesondere auch Melezitosehonig direkt in den Rahmen zu sammeln, unabhängig davon, ob der Honig kristallisiert oder flüssig ist. Insbesondere die gezielte Anordnung der Rahmen ermöglicht es den Bienen, das Wabenwerk in den Rahmen zu errichten, wobei der Honig gelagert wird, ohne dass die verdeckelten, mit Honig gefüllten Waben bei der Öffnung der Fassungsvorrichtung aufgerissen werden. Diese effiziente Erntemethode bewahrt die hohe natürliche Qualität des Honigs, ohne zusätzliche Kosten zu verursachen. Dadurch wird nicht nur die Effizienz der Honigernte gesteigert, sondern auch die Qualität des Produkts erhalten, was es den Imkern ermöglicht, einen angemessenen Preis für ihren Honig zu erzielen.

Die präzise Abstandsberechnung im Inneren der Fassungsvorrichtung, welche vorliegend auch als Wabentasche bezeichnet wird, verhindert das Entstehen von Freiräumen. Ein Freiraum von mehr als 10 Millimetern würde dazu führen, dass die Bienen diesen mit Wild- und Naturwabenbau füllen, was bei der Ernte zu einem Bruch der reifen, verdeckelten Kassetten führen könnte. Durch diese methodische Anordnung wird die Integrität der Waben während des Honigernteprozesses bewahrt und die Effizienz der Honiggewinnung erheblich verbessert.

Der Ausbau des Wabenwerkes mit Naturwabenbau wird durch die gleichmäßige Anordnung der Rahmen, welche vorliegend auch als Kassetten bezeichnet werden, begünstigt, was eine einfache Ernte der vollen Rahmen bzw. Kassetten ermöglicht, ohne dass dabei die fertig gefüllten Wabenkassetten und deren gefüllten Honigwabenzellen beschädigt werden. Eine Beschädigung der Zellen und somit das Ausfließen von Honig ist bei den Standard Einspann-Rahmen, die im Imkereifachhandel angeboten werden, bekannt. Für die Imkerinnen und Imker bedeutet dies einen Verlust des Verkaufswertes, da die mit Honig gefüllten Kassetten aus der Wabentasche nicht mehr in einem sauberen, ästhetischen Zustand verpackt werden können.

Unabhängig von Melezitosehonig bietet die Herstellung von Wabenhonig in den speziell dafür konzipierte Fassungsvorrichtung signifikante Vorteile, insbesondere hinsichtlich der Honigqualität. Messungen haben ergeben, dass die erfindungsgemäße Konstruktion der Fassungsvorrichtung, die speziell zur Aufnahme von Rahmen entwickelt wurde, durch das sich in ihr beim Ausbau durch die Bienen einstellenden Mikroklima einen besonderen Reifegrad des Honigs ermöglicht. Dieser Qualitätsvorteil des Honigs lässt sich quantitativ durch den Gehalt an Glucoseoxidase (GOX) messen, einem Enzym, das wesentlich zur Stabilität und antimikrobiellen Eigenschaften des Honigs beiträgt. Die erfindungsgemäße Anordnung ermöglicht es damit Berufs- und Hobbyimkern auf einfache und kostengünstige Weise sehr zuverlässig qualitativ besonders hochwertigen Wabenhonig zu produzieren.

Die erfindungsgemäße Anordnung ermöglich auf einfache und effiziente Weise eine lotrechte Positionierung der Rahmen in der Bienenbeute, wodurch ein unerwünschter Wildbau der Bienen, der den angestrebten Abmessungen der ausgebauten Wabe nicht genügt und zu Ausschuss führt, vermieden werden kann. Ein weiterer Vorteil besteht in der flexiblen Anordnung der Rahmen bzw. Wabenkassetten innerhalb der Fassungsvorrichtung. Es ist möglich, beispielsweise in vertikaler Richtung zwei Reihen mit Kassetten in den verschiedenen Maßen (Rechteck, Dreieck, Kreis, Sechseck, Ellipse, Rhombus, Pentagon) übereinander oder drei Reihen übereinander zu spannen, um sie von den Bienen gezielt mit Honig befüllen zu lassen. Ebenso ist es möglich, nur eine Reihe in der Wabentasche mit Kassetten jeder Form (Rechteck, Dreieck, Kreis, Sechseck, Ellipse, Rhombus, Pentagon) anzuordnen.

In einer beispielhaften Ausgestaltung können die Rahmen in axialer Richtung mindestens eine Vertiefung aufweisen. Zusätzlich oder alternativ dazu kann die durch die Innenseite ausgehend von dem Rand gebildete Vertiefung zur zumindest teilweise formschlüssigen und derartigen aneinandergereihten Aufnahme der Mehrzahl an Rahmen ausgebildet sein, dass die Mittelachsen der Rahmen parallel zueinander verlaufen und eine Rahmenaußenoberfläche jedes Rahmens zumindest teilweise an der Innenseite der Halterung anliegt.

In einer weiteren Variante kann die Anordnung mindestens eine Inlay-Halterung umfassen, welche zur Aufnahme mindestens eines Rahmens, vorzugsweise mehrerer Rahmen, und zur Anordnung in der Fassungsvorrichtung ausgebildet ist. Dies ermöglicht eine einfache Anpassung an verschiedene Rahmenformen, wie z. B. die im Folgenden beschriebenen Formen.

Die Rahmen können jeweils in einer Ansicht in Richtung der Mittelachse, also der Mittelachse des jeweiligen Rahmens, eine mehreckige Form, z. B. die Form eines Vielecks oder eines Dreiecks oder eines Vierecks, beispielsweise eines Rechtecks, Quadrats, Rhombus, oder Trapezes, oder eines Pentagon eines Sechsecks, etc., oder eine gekrümmte Form, also mit anderen Worten eine mindestens eine Krümmung aufweisende oder runde Form, insbesondere eine kreisrunde oder eine ovale oder eine elliptische Form, aufweisen. Hierdurch lassen sich verschiedene ästhetische Anforderungen oder Verpackungsanforderungen anwenderspezifisch erfüllen.

In einer vorteilhaften Variante umfasst die Fassungsvorrichtung mindestens ein Königinnen-Absperrgitter. Das Königinnen-Absperrgitter kann im zusammengebauten Zustand der erfindungsgemäßen Anordnung beispielsweise zwischen der ersten Halterung und der zweiten Halterung angeordnet, z. B. eingespannt, sein.

Das mindestens eine Königinnen-Absperrgitter kann an der oberen und/oder unteren Längsseite der Fassungsvorrichtung angeordnet sein. Zur Aufnahme eines Königinnen-Absperrgitters kann mindestens ein durchgehender Schlitz entlang der gesamten Länge in dem Rand der ersten Halterung und der zweiten Halterung der Fassungsvorrichtung bzw. der Wabentasche vorgesehen sein.

Das Königinnen-Absperrgitter, idealerweise aus Metall gefertigt, kann auch aus Kunststoff oder ähnlichen Materialien hergestellt werden, die effektiv verhindern, dass die Bienenkönigin in das Innere der Fassungsvorrichtung gelangt. Die Arbeiterbienen, die kleiner als die Königin sind, können problemlos in den Innenbereich der Fassungsvorrichtung gelangen, um das Wabenwerk auszubauen und die Wabenrahmen oder -kassetten mit Honig zu füllen. Würde die Bienenkönigin in den Innenbereich der Wabentasche gelangen und dort Eier in den errichteten Wabenzellen ablegen, bliebe kein Platz für den Honig. Dies würde nicht nur den Verlust des Honigs bedeuten, sondern auch erheblichen finanziellen Schaden verursachen, da die fertigen Wabenrahmen oder -kassetten, die mit Bienenbrut belegt sind, nicht für den Verkauf verwendet werden können.

Ein weiterer Vorteil besteht darin, dass die erfindungsgemäße Anordnung aufgrund der Integration von Absperrgittern im gesamten Bienenstock verwendet werden kann, ohne dass zusätzliche Kosten für ein weiteres Absperrgitter entstehen. Das Absperrgitter hat die spezielle Funktion, die Königin gezielt im Brutraum des Bienenstocks zu halten und zu verhindern, dass sie in die Wabentasche gelangt, um dort Eier zu legen. Sollte die Königin dennoch in die Wabentasche gelangen und Eier ablegen, wäre der Honig durch die Anwesenheit von Eiern und Bienenbrut kontaminiert und somit nicht mehr verkaufsfähig.

Darüber hinaus führt die Verwendung der Wabentasche insofern zu einer Kostenersparnis, dass kein zusätzliches handelsübliches Absperrgitter benötigt wird. Dieses Absperrgitter wird normalerweise von Imkerinnen und Imkern verwendet, um den Brutraum, in dem sich die Bienenkönigin und die Bienenbrut befinden, vom Honigraum zu trennen und so zu verhindern, dass die Bienenbrut mit den Honigwaben vermischt wird. Die Integration des Absperrgitters in die Wabentasche steigert nicht nur die Flexibilität, sondern auch die Effizienz in der Handhabung, was den Imkeralltag erheblich erleichtert.

Zusätzlich oder alternativ zu der Verwendung eines Absperrgitters können die erste Halterung und/oder die zweite Halterung mindestens eine Durchgangsöffnung, vorzugsweise mehrere Durchgangsöffnungen, aufweisen, welche eine Abmessung von mindestens 6 Millimetern bezüglich ihres Durchmessers und/oder ihrer Länge und Breite aufweist, welche also mit anderen Worten so bemessen oder dimensioniert ist/sind, dass Bienen mit Ausnahme der Königin durch sie hindurchgelangen können. Hierzu kann die jeweilige Durchgangsöffnung in einer Ebene senkrecht zu einer in Durchgangsrichtung der Öffnung verlaufenden Richtung in mindestens einer Richtung der Ebene, welche mit anderen Worten den Öffnungsquerschnitt definiert, eine minimale Ausdehnung zwischen 6 Millimetern und 12 Millimetern aufweisen. Die mindestens eine Durchgangsöffnung kann z. B. als Langloch oder Schlitz ausgebildet sein, z. B. mit einer Breite zwischen 6 Millimetern und 12 Millimetern und einer Länge zwischen 15 Millimetern und 70 Millimetern. Die Breite der Schlitze ist vorzugsweise so optimiert, dass ausschließlich die Arbeiter-Bienen hindurchgelangen können, ähnlich der Wirkungsweise des Absperrgitters, das entlang der gesamten oberen und unteren Längsseiten der Fassungsvorrichtung angebracht sein kann.

Die mindestens eine Durchgangsöffnung ermöglicht den Bienen auf einfache Weise von festgelegten Seiten der Anordnung Zugang zu den auszubauenden Rahmen und verhindert gleichzeitig einen Zugang der Königin. Damit lässt sich die erfindungsgemäße Anordnung überall im Bienenstock positionieren, was die Flexibilität erhöht und einen sehr breiten Anwendungsspielraum eröffnet. Aus der universellen Einsetzbarkeit sowie der einfachen Handhabung der erfindungsgemäßen Anordnung im Bienenstock ergibt sich ein weiterer finanzieller Vorteil für Imkerinnen und Imker. Beispielhaft können die Schlitze, Löcher oder andere Durchgangsmöglichkeiten auf beiden Seiten der Wabentasche oder Fassungsvorrichtung integriert sein. Idealerweise können eine oder beide Seiten der Wabentasche oder Fassungsvorrichtung aus Kunststoff oder Metall gefertigt sein, um eine erhöhte Stabilität zu gewährleisten und die Fläche der Durchgangsöffnungen zum Innenbereich der Fassungsvorrichtung vergrößern.

Die Länge der Durchgangsschlitze in der Wabentasche bzw. Fassungsvorrichtung kann so berechnet werden, dass sie maximal 95 Prozent der Gesamtlänge der Fassungsvorrichtung ausmachen. Die Ausführung dieser Schlitze kann variieren. Sie können als durchgehender Schlitz, als unterbrochener Schlitz oder als eine Kombination aus beidem gestaltet sein. Alternativ können die Durchgänge oder Durchgangsöffnungen auch durch einzelne runde Löcher oder rechteckige Ausschnitte ausgebildet werden, um den Bienen einen schnelleren Zugang zum Innenbereich der Fassungsvorrichtung oder Wabentasche zu ermöglichen.

Die beschriebene Konfiguration der Schlitze fördert den schnellen Ausbau der Rahmen oder Kassetten im Inneren der erfindungsgemäßen Anordnung durch die Bienen und ermöglicht den Imkern und Imkerinnen die Wabentasche direkt an das Brutnest anzuhängen. Für Imkerinnen und Imker bietet dies den Vorteil, dass die erfindungsgemäße Anordnung im gesamten Bienenstock eingesetzt werden kann und nicht als "Schied oder Trennschied" funktioniert was eine abgrenzende Funktion hätte. Darüber hinaus erleichtert eine Anordnung der Wabentasche direkt neben dem Brutnest die Ernte von Frühjahrshonig. Die frühzeitige Nutzung der erfindungsgemäßen Anordnung zu einem Zeitpunkt im Jahr, an dem das Bienenvolk noch nicht seine volle Stärke erreicht hat, ermöglicht eine effiziente Produktion von Wabenhonig. Dies umfasst auch Frühjahrshonig, wie Blütenhonig, der mit regulären Methoden in der Imkerei oft schwieriger zu gewinnen ist und oft nur erfahrenen Imkern und Imkerinnen gelingt.

Die Rahmen haben typischerweise in axialer Richtung eine Abmessung zwischen 35 und 40 Millimetern, vorzugweise von 37 Millimetern. Dieses Maß ermöglicht einen optimalen Ausbau von Wabenwerk und Honig für Anwendungen als Wabenhonig.

Die erste Halterung und die zweite Halterung können jeweils eine Länge zwischen 200 Millimetern und 500 Millimetern, beispielsweise zwischen 370 Millimetern und 450 Millimetern, und/oder eine Breite zwischen 90 Millimetern und 340 Millimetern, beispielsweise zwischen 110 Millimetern und 230 Millimetern, und/oder eine Stärke oder Dicke oder Höhe zwischen 30 Millimetern und 60 Millimetern, vorzugsweise zwischen 40 Millimetern und 45 Millimetern, aufweisen. Die Fassungsvorrichtung kann in einer dem zusammengebauten Zustand entsprechenden, aufeinanderliegenden Anordnung der ersten Halterung und der zweiten Halterung mit dazwischen angeordneten Rahmen eine Länge zwischen 200 Millimetern und 500 Millimetern, beispielsweise zwischen 370 Millimetern und 450 Millimetern, und/oder eine Breite zwischen 90 Millimetern und 340 Millimetern, beispielsweise zwischen 110 Millimetern und 230 Millimetern, und/oder eine Stärke oder Dicke zwischen 67 Millimetern und 130 Millimetern aufweisen. Zusätzlich oder alternativ dazu können als Teil der Befestigungsmittel Durchgangsbohrungen mit einem Durchmesser zwischen 3,5 Millimetern und 6 Millimetern, vorzugsweise 4,5 Millimetern, in der ersten Halterung und der zweiten Halterung vorgesehen sein.

In einer vorteilhaften Variante weist die erfindungsgemäße Anordnung im zusammengebauten Zustand in einer Draufsicht bezüglich einer Positionierung in einer Beute die Form eines Rechtecks auf. In der Mitte des Rechteckes verläuft in dieser Variante durchgehend ein Schlitz mit einer Breite zwischen 5 mm und 12 mm, beispielsweise zwischen 6 mm und 9 mm, vorzugsweise 7 mm aufzuweisen. Das Rechteck kann eine erste Seitenlänge von mindestens 220 mm und eine zweite Seitenlänge von mindestens 450 mm oder mindestens 500 mm aufweisen.

In einer weiteren Variante kann die geometrische Form der Innenseite der ersten Halterung und/oder der zweiten Halterung und/oder der Inlay-Halterung an die Form, insbesondere der Außenoberfläche, der Rahmen, vorzugsweise zur zumindest teilweise formschlüssigen Aufnahme der Rahmen, angepasst sein und/oder anpassbar ausgestaltet sein. Dies kann beispielsweise durch eine entsprechende Ausformung der Halterungen oder durch Zusatzelemente realisiert sein oder werden. Die Zusatzelemente können in die jeweilige Halterung einlegbar und/oder einklemmbar und/oder fixierbar, z. B. durch Kleben, Schrauben, Klemmen, etc., sein. Optional können die Innenoberflächen der Halterungen als geometrisches Negativ der an ihnen im zusammengebauten Zustand der erfindungsgemäßen Anordnung anliegenden Außenoberflächen der Rahmen ausgeformt sein. Hierdurch wird eine zuverlässige Positionierung der Rahmen in der Fassungsvorrichtung gewährleistet.

In einer bevorzugten Variante ist mindestens eine der Halterungen, vorzugsweise beide Halterungen, halbschalenförmig oder kastenförmig ausgestaltet. Die Form kann insbesondere so gewählt werden, dass der in der Wabentasche oder Fassungsvorrichtung verfügbare Raum effizient genutzt wird. Der Freiraum in der Wabentasche wird auf diese Weise optimal effizient genutzt, um ein Maximum an Honig und Wabenwerk von den Bienen zu bekommen und gleichzeitig Wildbau zu verhindern oder zumindest zu reduzieren.

Das mindestens eine Befestigungsmittel kann mindestens eine Schraubverbindung und/oder mindestens eine Steckverbindung und/oder mindestens eine Klemmverbindung umfassen. Vorzugsweise weist die erfindungsgemäße Anordnung zwei Befestigungsmittel auf, in der einfachsten Ausgestaltung zwei Holzschrauben, die im zusammengebauten Zustand der erfindungsgemäßen Anordnung an einander gegenüber liegenden Seiten die erste Halterung und die zweite Halterung miteinander lösbar verbinden. Das Befestigungsmittel kann mindestens eine Schraube und/oder mindestens eine Mutter und/oder mindestens ein Innengewinde und/oder mindestens einen Stift, vorzugsweise einen Metallstift, umfassen. Die genannten Verbindungsmittel haben den Vorteil, dass die erfindungsgemäße Anordnung sehr einfach zu montieren und zu demontieren ist und gleichzeitig eine hohe Präzision der eingespannten Rahmen und die erforderliche Festigkeit im Rahmen der Anwendung der erfindungsgemäßen Anordnung gewährleistet ist.

Die Mehrzahl an Rahmen und/oder die Fassungsvorrichtung können Holz und/oder Kunststoff umfassen oder aus Holz oder Kunststoff bestehen. Weiterhin können die Mehrzahl an Rahmen und/oder die Fassungsvorrichtung in einem 3D-Druckverfahren hergestellt sein, z. B. aus Kunststoff oder Metall. Alternativ besteht die Möglichkeit, die Fassungsvorrichtung vollständig aus Metall, Holz oder einer Kombination dieser Materialien, wie Holz-Kunststoff-Metall, Holz und Metall, oder Holz und Kunststoff zu fertigen. Die Auswahl der Materialien erfolgt dabei so, dass sie nicht nur hygienischen Standards entsprechen, sondern auch das Wohl von Mensch, Bienen und der Natur berücksichtigen. Hierdurch lassen sich die jeweiligen Vorteile des Materials oder der Materialkombination sowie die Vorteile der entsprechenden Herstellungs- und Bearbeitungsverfahren nutzen. Hierbei spielen Faktoren wie Hygieneanforderungen, Material- und Herstellungskosten sowie die Stückzahl eine Rolle. Diesen Faktoren kann mit den genannten Varianten nutzerspezifisch Rechnung getragen werden.

Die Rahmen können jeweils eine Mittelwand, vorzugsweise aus Bienenwachs, oder einen Anfangsstreifen, z. B. aus Bienenwachs oder Holz, umfassen. Hierdurch lässt sich der nachfolgende Ausbau der Waben in den Rahmen durch die Bienen zumindest teilweise steuern.

In einem zusammengebauten Zustand der Anordnung können die Halterungen, also die erste Halterung und die zweite Halterung, in mindestens einem Teilbereich oder vorzugsweise entlang des gesamten Umfangs der Ränder der Halterungen einen Abstand von mindestens 6 Millimetern und/oder maximal 12 Millimetern aufweisen. Vorteilhafterweise ist ein umlaufender Abstand zwischen dem Rand der ersten Halterung und dem Rand der zweiten Halterung vorgesehen. Der Abstand kann beispielsweise zwischen 6 Millimetern und 12 Millimetern betragen, insbesondere zwischen 7 Millimetern und 10 Millimetern. Diese Maße sind im Hinblick auf den erforderlichen Bienenabstand und das angestrebte Klima im Inneren der Anordnung von Vorteil und tragen zur Produktion von dem oben beschriebenen qualitativ hochwertigen Honig mit einem hohen Anteil an Glucoseoxidase (GOX) bei.

In einer weiteren Variante weisen die Rahmen entlang ihres Umfangs sich parallel zur Mittelachse erstreckende Vertiefungen, also mindestens eine Vertiefung pro Rahmen, auf, die so ausgestaltet und/oder bemessen sind, dass bei einer aneinander gereihten Anordnung von mindestens zwei Rahmen mindestens eine sich in radialer Richtung bezüglich der Mittelachse erstreckende Durchgangsöffnung zu dem Inneren der Rahmen oder mit anderen Worten zu den Durchgangsöffnungen der Rahmen ausgebildet wird, welche eine Abmessung von mindestens 6 Millimetern bezüglich ihres Durchmessers und/oder ihrer Länge und Breite aufweist. Es wird mit anderen Worten zwischen benachbarten Rahmen eine Durchgangsöffnung bereitgestellt, welche eine Biene passieren kann.

Die Fassungsvorrichtung kann zudem eine an mehrere Stockmaße anpassbare Einrichtung zum Positionieren, z. B. zum Einhängen und/oder Platzieren und/oder Einspannen; der Anordnung in einer Bienenbeute aufweisen. Durch eine Anpassbarkeit an verschiedene Stockmaße lassen sich große Stückzahlen der erfindungsgemäßen Anordnung kostengünstig herstellen. Dies eröffnet einen breiten Nutzerkreis, vom Berufsimker bis zum Hobbyimker.

Die erfindungsgemäße Anordnung hat den Vorteil, dass ihre innere Konstruktion an verschiedene Formen von Rahmen oder Waben-Kassetten angepasst werden kann, in denen die Bienen den Wildwabenbau mit Honig vornehmen. Ein weiterer Vorteil dieser Anordnung ist die Möglichkeit, viele kleine Rahmen aus Holz oder Kunststoff aufzunehmen, die dann zielgerichtet von den Bienen innerhalb des Bienenstocks ausgebaut werden. Die Honigernte erfolgt nach der Verdeckelung der Waben, wie es bei traditionellen Honigwaben üblich ist. Hierfür wird die Verbindung der zwei Halterungen, zwischen denen die Rahmen oder Kassetten gespannt sind, geöffnet. Die Rahmen oder Kassetten können leicht aus der Halterung in der Wabentasche oder Fassungsvorrichtung entnommen und in eine entsprechende Verpackung transferiert werden. Dies spart im Vergleich zur herkömmlichen Honigernte erheblich Zeit und sorgt dafür, dass der Honig in den Waben oder Kassetten nur minimal Lichtquellen ausgesetzt ist, was die Qualität des Honigs bemerkenswert verbessert.

Die traditionelle Honigernte erfordert einen erheblichen mechanischen Aufwand. Dieser beginnt mit dem Entnehmen der reifen Honigwaben und setzt sich fort in verschiedenen mechanischen Entdeckelungsprozessen, um den Honig anschließend mittels Zentrifuge aus den Wabenzellen zu extrahieren. Abhängig von der Betriebsgröße wird der Honig durch Pumpen in große Lagergefäße überführt. Abhängig vom Wassergehalt des Honigs wird dieser zudem in einer Trocknungsanlage behandelt, die den Wassergehalt reduziert, um eine sichere Haltbarkeit zu gewährleisten. Durch diese umfangreichen industriellen Prozesse und den Kontakt mit Lichtquellen verliert das Naturprodukt aus dem Bienenstock signifikant an seiner ursprünglichen Qualität und wertvollen Inhaltsstoffen. Hier bietet die vorliegende Erfindung eine vorteilhafte und günstige Alternative.

Ein weiteres vorteilhaftes Merkmal der erfindungsgemäßen Anordnung ist die spezifische Anordnung der Rahmen bzw. Kassetten. Diese werden innerhalb der Fassungsvorrichtung so angeordnet, dass ein gleichmäßiger Abstand zwischen den einzelnen Rahmen gewährleistet ist. Diese Rahmen werden von den Bienen im Bienenstock mit Naturwaben und Honig befüllt. Der regelmäßige Abstand zwischen den Kassetten ist entscheidend, da er eine gleichmäßige Ausbauaktivität durch die Bienen im Bienenvolk gewährleistet.

Die vorliegende erfindungsgemäße Anordnung ist speziell für das Einspannen von kleinen Rahmen zur gezielten Gewinnung von Wabenhonig konzipiert. Es können Rahmen, z. B. gefertigt aus Materialien wie Holz, Kunststoff oder einem ähnlichen Werkstoff, verwendet werden, welche sowohl im Fachhandel als auch bei spezialisierten Produzenten erhältlich sind. Nachdem eine der Halterungen mit Rahmen oder Kassetten vollständig bestückt ist, wird die zweite Halterung darüber positioniert und mittels z. B. eines Metallstifts fest mit der ersten Halterung verbunden. Durch diese zwei verbundenen Halterungen entsteht eine Wabentasche, die im Inneren die kleinen Wabenrahmen oder Wabenkassetten aufgenommen hat und die im Bienenstock eingesetzt wird. Die Rahmen oder Kassetten haben typischerweise eine Breite von 37 mm, welche ausreichend Raum für den Aufbau des Wabenwerks durch die Bienen bietet und das Zusammenwachsen mit benachbarten Rahmen verhindert. Die Rahmen oder Kassetten können an den oberen und unteren Enden mit länglichen Schlitzen versehen sein. Diese Schlitze können in der zusammengefügten Anordnung innerhalb der Fassungsvorrichtung bzw. der Wabentasche eine Breite von 10 mm haben und bieten den Bienen Zugang, um das Innere der Rahmen oder Kassetten für den Aufbau von Wabenmaterial und die Einlagerung von Honig zu erreichen.

Ein weiterer Vorteil der erfindungsgemäßen Anordnung besteht in der Möglichkeit einer effizienten Nutzung des Leerraums innerhalb der Konstruktion. Durch die standardisierte Produktion der Wabenrahmen mit einer Außenabmessung von Länge 100 x Breite 100 x Höhe/Tiefe 37 Millimetern und die Anpassungsfähigkeit der Wabentasche an verschiedene Rahmenabmessungen, die von Imkerinnen und Imkern in den Bienenstock eingehängt werden, kann konstruktionsbedingt ein Leerraum in der Wabentasche entstehen. Ohne eine Anpassung würden die Bienen diesen Leerraum in der Wabentasche, auch Fassungsvorrichtung genannt, mit Wildbau aus Bienenwachs und Honig füllen. Dieser unkontrollierte, natürliche Wabenbau würde bei der Nutzung nach dem erfindungsgemäßen Prinzip brechen, wodurch Honig über die restlichen Wabenkassetten fließen und zu einem erheblichen Mehraufwand bei der Ernte führen könnte. Zudem könnte dies dazu führen, dass die vollen Erntereifen Wabenkassetten aufgrund des ausgelaufenen Honigs von den Imkern nicht verwendbar wären. Daher umfasst die Anordnung in einer vorteilhaften Variante an den potenziellen Leerraum neben oder auf den verwendeten Standardrahmen innerhalb der Fassungsvorrichtung angepasst mindestens ein Füllelement, z. B. Füllholz oder Füllleiste oder Füllbrett, und/oder mindestens eine/n an den potenziellen Leerraum innerhalb der Fassungsvorrichtung angepassten Rahmen oder Wabenhonigkassette. Mit anderen Worten kann die Fassungsvorrichtung mindestens ein an einen Leerraum innerhalb der Fassungsvorrichtung geometrisch angepasstes Füllelement und/oder mindestens einen an einen Leerraum innerhalb der Fassungsvorrichtung geometrisch angepassten Rahmen umfassen.

Das Rahmenmaß der Kassetten mit den Außenabmessungen (Länge x Breite x Höhe/Tiefe) 100x100x37 mm hat sich in der Imkerei als etablierte Maßeinheit für Wabenhonig etabliert. Je nach Tracht und Volksstärke des Bienenvolkes kann dieses Format zwischen 180 und 220 Gramm Honig inklusive des Wabenwerks und der Holzrahmenkassette fassen. Um den Leerraum zu kompensieren, gibt es zwei Möglichkeiten: 1. die Verwendung von Holzleisten oder ähnlichen harten Füllmaterialien und 2. das Füllen des Leerraums mit kleineren Wabenkassetten, die als Füllkörper dienen. Wenn der verbleibende Leerraum in der Wabentasche bei Nutzung von Kassetten mit überwiegend 100x100x37 mm Außenabmessungen mit kleineren, rechteckigen Wabenkassetten als Füllkörper gefüllt wird, können diese ebenfalls von den Bienen mit Wabenwerk und Honig befüllt werden.

Durch den Einsatz geeigneter Spannvorrichtungen ist es möglich, diverse Formen wie Dreiecke, Kreise, Deltoiden, Quadrate, Rechtecke und Oktaeder in der Wabentasche zu verwenden. Zudem kann die Auswahl der Rahmen oder Kassetten so getroffen werden, dass kein Leerraum in der Wabentasche entsteht. Idealerweise können die Wabenkassetten in einer bis zwei Anordnungen, übereinander oder nebeneinander, platziert werden. In optimalen Konfigurationen können sogar drei bis fünf Anordnungen von Rahmen oder Wabenkassetten übereinander oder nebeneinander in der erfindungsgemäßen Fassungsvorrichtung integriert werden. Das Prinzip der Anordnung in der Wabentasche ist ähnlich dem des bekannten Spiels Tetris, bei dem verschiedene geometrische Formen so angeordnet werden, dass sie eine lückenlose Struktur bilden. Somit kann jeder Freiraum in der Wabentasche mit den Rahmen oder Kassetten genutzt und von den Bienen mit Honig befüllt werden. Diese kleineren Rahmen oder Wabenkassetten, die als Füllkörper in der Wabentasche dienen, können ähnlich den "Honigsticks" verwendet werden. Diese Form bietet Imkerinnen und Imkern die Möglichkeit, sie als zusätzliches Werbemittel zu nutzen, um beispielsweise als Kostprobe den Einstieg und das Kennenlernen des Produkts Wabenhonig zu erleichtern, oder als kleines Werbegeschenk lukrativ vermarktet werden.

Die Konstruktion der erfindungsgemäßen Anordnung oder Wabentasche setzt sich vorzugsweise aus einzeln vorgefertigten Teilen zusammen, die modular ineinandergesteckt werden können. Die Halterungen oder zusätzliche Seitenteile der Wabentasche können aus Kunststoff, Aluminium oder Holz gefertigt sein, was eine vielseitige Materialauswahl ermöglicht. Zur zusätzlichen Verstärkung können die Auflagestellen an den Seiten der Fassungsvorrichtung, die die gesamte Wabentasche tragen, auf jeder Seite dreimal von innen mit Metallschrauben befestigt sein. Diese Konstruktionsweise gewährleistet eine hohe Stabilität und Langlebigkeit der Wabentasche. Durch die Anpassung eines Mittelteils zwischen den beiden Seitenteilen ist eine effiziente Herstellung der gesamten Fassungsvorrichtung, sowohl aus Holz als auch aus Kunststoff, in Serienfertigung möglich. Die Abstimmung auf die Serienfertigung bietet den weiteren Vorteil, größere Stückzahlen produzieren zu können und zugleich die Kosten pro Stück zu reduzieren.

Die Fassungsvorrichtung kann wie folgt aufgebaut sein. Die erste und die zweite Halterung können jeweils einem Holzrahmen umfassen. Die Dicke der Rahmenkonstruktion, auf der eine vier Millimeter starke Außenplatte montiert werden kann, richtet sich nach der Größe der Bienenbeute, in die die erfindungsgemäße Anordnung integriert wird. Die Außenabmessungen der Anordnung, einschließlich Breite, Höhe sowie Länge einer oberen Trägerleiste, werden entsprechend den variierenden Größen der Bienenbeuten angepasst. Die Rahmen oder Kassetten werden vorzugsweise stets rechtwinkelig bzw. parallel zu den oberen und unteren Leisten der Anordnung eingebaut. Gemäß der Fachsprache der Imker wird die Anordnung der Rahmen oder Kassetten rechtwinklig zur langen Trägerleiste als "Warmbau" bezeichnet. Konstruktionsbedingt und gemäß der Idee der Erfindung werden die Rahmen oder Kassetten bevorzugt im Warmbau innerhalb der Fassungsvorrichtung positioniert.

Die Fassungsvorrichtung kann vorteilhafterweise in dem entsprechenden Rahmenmaß der Bienenbeute gefertigt werden, in welchem die Rahmen oder Kassetten für den Wabenhonig gestapelt werden. Der Zugang für die Bienen zu den Rahmen oder Kassetten wird an der Unter- und Oberseite der Fassungsvorrichtung durch einen durchgehenden Abstand oder Schlitz ermöglicht, der in der Mitte der Wabentasche durch die Konstruktion der beiden Halterungen entsteht.

Wenn die Rahmen oder Kassetten eine andere Form als Rechteck oder Quadrat aufweisen, können zusätzliche Leisten in den Halterungen eingebaut werden. Diese Leisten können schräg angebracht werden, um die Stabilität der Rahmen oder Kassetten in der Fassungsvorrichtung zu gewährleisten und zu verhindern, dass sie verrutschen oder kippen. Je nach Bedarf können in jede der Halterungen solche Holzleisten oder anderes Material eingefügt werden, um Hohlräume zu vermeiden und zu verhindern, dass die Bienen dort Wildbau betreiben. Die erfindungsgemäße Anordnung kann üblicherweise im Honigraum eingesetzt werden, kann aber auch im Ruhe- oder Leerzustand der Brutzarge platziert werden.

Ein weiterer Vorteil der erfindungsgemäßen Anordnung besteht in ihrer universellen Anwendbarkeit bezüglich verschiedener Rahmen. Die Rahmen oder Kassetten können, wie bereits beschrieben, um 90° zur horizontalen Längsachse in der Fassungsvorrichtung angeordnet werden. In einer weiteren vorteilhaften Ausgestaltung umfasst die erfindungsgemäße Anordnung mindestens eine Inlay-Halterung, welche zur Aufnahme mindestens eines Rahmens und zur Anordnung in der Fassungsvorrichtung ausgebildet ist. Dies eröffnet eine weitere Nutzung der erfindungsgemäßen Anordnung sowohl im Brutraum als auch im Honigraum.

Vorzugsweise füllt die Inlay-Halterung den Innenbereich der Fassungsvorrichtung abgesehen von Abständen und Öffnungen, die den Bienen Zugang gewähren, vollständig aus und ist gleichzeitig als Halterung für mindestens einen, vorzugsweise mehrere, Rahmen ausgelegt. Durch den Einsatz mindestens einer Inlay-Halterung, die den Innenbereich der Fassungsvorrichtung abgesehen von Abständen und Öffnungen, die den Bienen Zugang gewähren, vollständig ausfüllt und gleichzeitig als Halterung für die Rahmen oder Kassetten in diversen Formen dient, einschließlich Rechteck, Dreieck, Kreis, Sechseck, Ellipse, Rhombus, Pentagon und Oktaeder, wird eine flexible und einfache Anwendbarkeit der erfindungsgemäßen Anordnung auch gleichzeitig für unterschiedliche Rahmenformen ermöglicht. Je nach Bedarf können in der so angepassten Fassungsvorrichtung ein bis zwei, drei bis sechs oder vier bis zehn Inlay-Halterungen Platz finden. Die Anordnung der Rahmen oder Kassetten in der Fassungsvorrichtung, in welche die Bienen Honig und Wildbau einbringen, erfolgt dabei bevorzugt parallel zu den anderen Waben im Bienenstock. Insbesondere im Brutraum des Bienenstocks wird eine Anordnung der Kassetten oder Rahmen parallel zu den Brutwaben angestrebt. In der Imkerfachsprache wird es auch benannt als Anordnung im "Kaltbau".

Die einfache Bauweise der erfindungsgemäßen Anordnung ermöglicht eine flexible Anpassung der Höhe der Fassungsvorrichtung an die vielfältigen Rahmenhöhen, die am Markt verfügbar sind. Darüber hinaus können auf Wunsch auch Sonderhöhen neben den Standardmaßen speziell für Imkerinnen und Imker hergestellt werden.

Die Inlay-Halterung oder auch Spannvorrichtung für die Rahmen oder Kassetten kann in den verschiedenen Materialien angefertigt werden, wie idealerweise als Holz, Kunststoff, Glas, Porzellan, Metalle oder ähnlichem. Um die einfachste und effizienteste Ernte der reifen Honigrahmen oder Honigkassetten zu ermöglichen, kann die Inlay-Halterung aus zwei Bauteilen oder Hälften aufgebaut sein oder mit anderen Worten in der Breite geteilt sein. Zudem erleichtert ein dadurch mögliches Öffnen der Inlay-Halterung das Einspannen der Rahmen oder Kassetten.

Die zwei Bauteile der Inlay-Halterung können durch einen Holzdübel oder ein ähnliches Verbindungselement wieder zusammengefügt werden und somit als Halterung wirksam werden. In diese Inlay-Halterung können Rahmen oder Kassetten in unterschiedlichen Formen wie Rechteck, Dreieck, Kreis, Sechseck, Ellipse, Rhombus, Pentagon und Oktaeder eingespannt bzw. aufgenommen werden. Dabei können auch verschieden geformte Rahmen gleichzeitig aufgenommen werden.

Um einen optimalen Ausbau der Kassetten durch die Bienen zu ermöglichen, können an den Ecken der Inlay-Halterung mindestens vier Distanzhalter aus Holz, Metall, Kunststoff oder einem vergleichbaren Material montiert sein oder werden. Der Abstand zwischen gegebenenfalls mehreren Inlay-Halterungen in einer Fassungsvorrichtung wird bevorzugt so gewählt, dass er den notwendigen Bienenabstand von 4 bis 12 Millimetern, z. B. 5 bis 8 Millimetern, optimalerweise 6 bis 12 Millimeter, wahrt, um den Bienen den Zugang zu den Rahmen oder Kassetten von allen Seiten innerhalb der Fassungsvorrichtung oder Wabentasche zu ermöglichen.

Die erfindungsgemäße Anordnung optimiert die Herstellung von Wabenhonig, indem sie ein leicht handhabbares und effizientes Mittel zur Produktion von qualitativ hochwertigem Bienenhonig bietet. Diese Vorteile machen die Anordnung besonders attraktiv für Hobbyimker sowie professionelle Imker, da die Produktion von Wabenhonig in der Anordnung dazu führt, dass der Honig in den Rahmen oder Kassetten signifikant mit Glucoseoxidase (GOX), einem Enzym, das durch die Bienen hinzugefügt wird, angereichert ist. Die gesteigerte Aktivität von GOX im Honig, die wesentlich empfindlicher auf Licht und Hitze reagiert als andere Substanzen wie Methylglyoxal, steigert den gesundheitsfördernden Wert des Honigs. Ein höherer GOX-Wert macht den Honig nicht nur wertvoller für den menschlichen Konsum, sondern ermöglicht auch eine höherwertige Vermarktung. Obwohl die heilende Wirkung von Honig primär in klinischen Studien für Wundbehandlungen dokumentiert ist, belegen zahlreiche wissenschaftliche Untersuchungen die antibakteriellen, antiviralen und fungiziden Effekte einiger Honigsorten. Diese Eigenschaften gewinnen zunehmend an Bedeutung für Konsumenten, insbesondere vor dem Hintergrund einer wachsenden Zahl an resistenten Keimen.

Die Erfindung wird im Folgenden anhand von Ausführungsbeispielen unter Bezugnahme auf die beigefügten Figuren näher erläutert. Obwohl die Erfindung im Detail durch die bevorzugten Ausführungsbeispiele näher illustriert und beschrieben wird, so ist die Erfindung nicht durch die offenbarten Beispiele eingeschränkt und andere Variationen können von einer Fachperson hieraus abgeleitet werden, ohne den Schutzumfang der Erfindung zu verlassen.

Die Figuren sind nicht notwendigerweise detailgetreu und maßstabsgetreu und können vergrößert oder verkleinert dargestellt sein, um einen besseren Überblick zu bieten. Daher sind hier offenbarte funktionale Einzelheiten nicht einschränkend zu verstehen, sondern lediglich als anschauliche Grundlage, die einer Fachperson auf diesem Gebiet der Technik Anleitung bietet, um die vorliegende Erfindung auf vielfältige Weise einzusetzen.

Der hier verwendete Ausdruck "und/oder", wenn er in einer Reihe von zwei oder mehreren Elementen benutzt wird, bedeutet, dass jedes der aufgeführten Elemente alleine verwendet werden kann, oder es kann jede Kombination von zwei oder mehr der aufgeführten Elemente verwendet werden. Wird beispielsweise eine Zusammensetzung beschrieben, die die Komponenten A, B und/oder C, enthält, kann die Zusammensetzung A alleine; B alleine; C alleine; A und B in Kombination; A und C in Kombination; B und C in Kombination; oder A, B, und C in Kombination enthalten.
- Fig. 1: zeigt schematisch eine erste Variante einer erfindungsgemäßen Anordnung zur Produktion von Wabenhonig in einer ersten perspektivischen Explosionsansicht.
- Fig. 2: zeigt schematisch die in der Figur 1 gezeigte erfindungsgemäße Anordnung zur Produktion von Wabenhonig in einer zweiten perspektivischen Explosionsansicht.
- Fig. 3: zeigt schematisch die in der Figur 1 gezeigte erfindungsgemäße Anordnung zur Produktion von Wabenhonig in einer auseinandergebauten Seitenansicht.
- Fig. 4: zeigt schematisch eine Fassungsvorrichtung einer erfindungsgemäßen Anordnung zur Produktion von Wabenhonig im zusammengebauten Zustand in einer Seitenansicht.
- Fig. 5: zeigt schematisch einen Rahmen oder eine Kassette einer erfindungsgemäßen Anordnung zur Produktion von Wabenhonig in einer Draufsicht und zwei Seitenansichten.
- Fig. 6: zeigt schematisch die in der Figur 4 gezeigte Fassungsvorrichtung in einer Ansicht von unten.
- Fig. 7: zeigt schematisch die in der Figur 4 gezeigte Fassungsvorrichtung in einer weiteren Seitenansicht.
- Fig. 8: zeigt schematisch eine zweite Variante einer erfindungsgemäßen Anordnung zur Produktion von Wabenhonig in einer ersten perspektivischen Explosionsansicht.
- Fig. 9: zeigt schematisch die in der Figur 8 gezeigte erfindungsgemäße Anordnung zur Produktion von Wabenhonig in einer zweiten perspektivischen Explosionsansicht.
- Fig. 10: zeigt schematisch die in der Figur 8 gezeigte erfindungsgemäße Anordnung zur Produktion von Wabenhonig in einer dritten perspektivischen Explosionsansicht, wobei nur eine der zwei Halterungen gezeigt ist.
- Fig. 11: zeigt schematisch die in der Figur 8 gezeigte erfindungsgemäße Anordnung zur Produktion von Wabenhonig in einer vierten perspektivischen Explosionsansicht.
- Fig. 12: zeigt schematisch eine dritte Variante einer erfindungsgemäßen Anordnung zur Produktion von Wabenhonig in einer perspektivischen Explosionsansicht.
- Fig. 13: zeigt schematisch verschiedene Rahmen in einer Seitenansicht.
- Fig. 14: zeigt schematisch die in der Figur 13 gezeigten Rahmen in einer perspektivischen Ansicht.
- Fig. 15: zeigt schematisch einen Rahmen mit einem Anfangsstreifen in einer perspektivischen Ansicht.
- Fig. 16: zeigt schematisch eine Inlay-Halterung in einer perspektivischen Explosionsansicht.

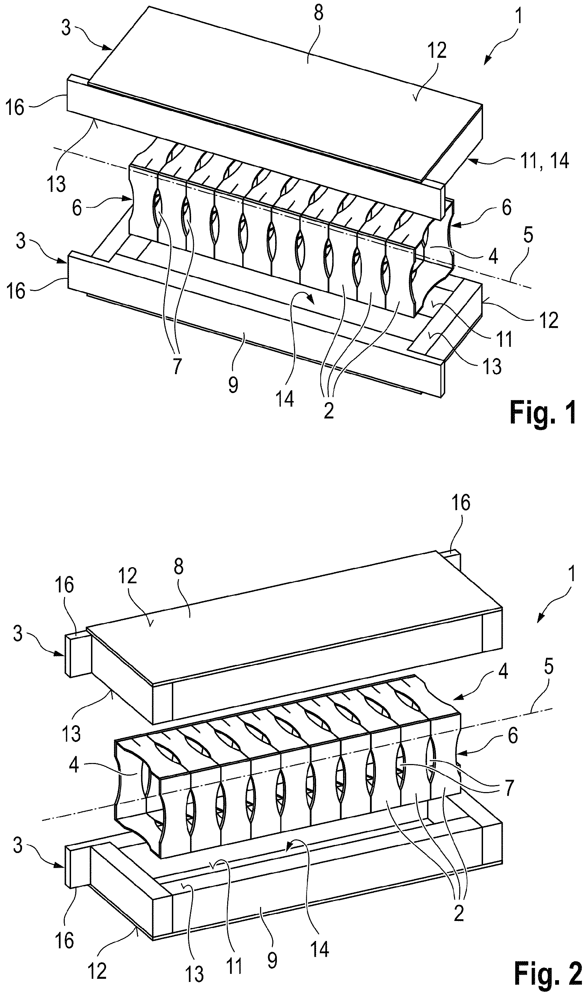

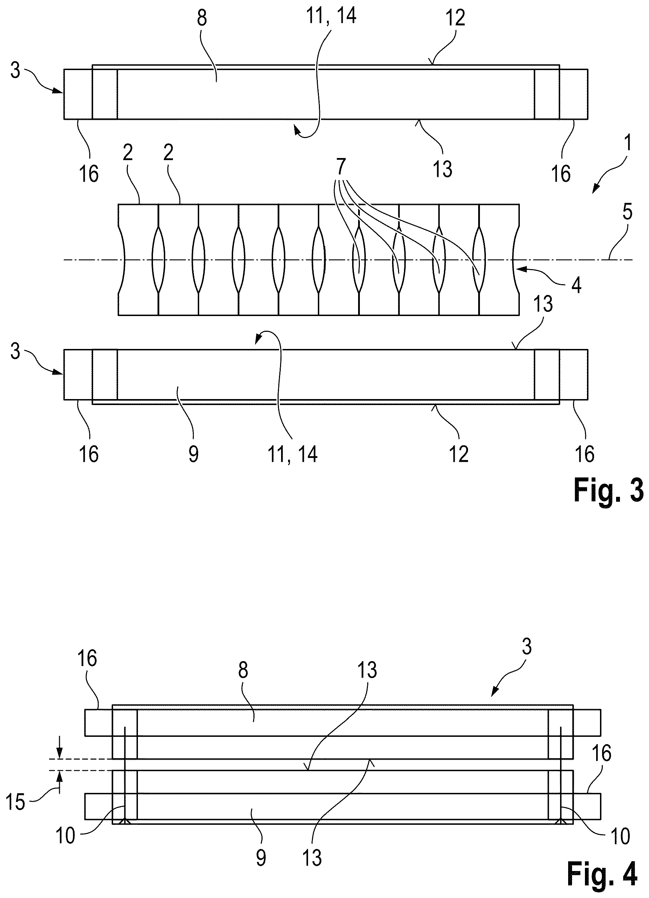

Im Folgenden wird eine Ausführungsvariante der Aufbau und die Handhabung einer erfindungsgemäßen Anordnung zur Produktion von Wabenhonig anhand der Figuren 1 bis 7 näher erläutert. Die Figuren 1 und 2 zeigen schematisch eine erfindungsgemäße Anordnung 1 zur Produktion von Wabenhonig in zwei perspektivischen Explosionsansichten oder im auseinandergebauten Zustand der Anordnung 1. Die Figur 3 zeigt die Anordnung 1 der Figuren 1 und 2 in einer Seitenansicht. Die Anordnung 1 umfasst eine Mehrzahl an Rahmen oder Kassetten 2 und eine Fassungsvorrichtung 3 zum Aufnehmen, sowie optional zum Positionieren und Fixieren, der Mehrzahl an Rahmen 2. Die Rahmen 2 können in der Fassungsvorrichtung 3 in einer oder mehreren Reihen angeordnet sein bzw. werden, Insbesondere übereinander und/oder nebeneinander.

Die Rahmen 2 weisen jeweils eine durch den Rahmen 2 definierte Durchgangsöffnung 4 mit einer Mittelachse 5 auf. Weiterhin weisen die Rahmen in axialer Richtung 5 mindestens eine Vertiefung 6 auf, also einen Bereich mit verminderter Länge in axialer Richtung 5, zur Ausbildung eines Bienenabstandes auf. In der gezeigten Variante weist jeder der Rahmen 2 acht Vertiefungen 6 auf, konkret an den vier Seiten, welche den Rahmen 2 bilden, jeweils zwei Vertiefungen 6 an den einander gegenüberliegenden Kanten. Durch die Vertiefungen 6 werden bei einer aneinandergereihten Anordnung der Rahmen 2, wie in den Figuren 1 und 2 gezeigt, zwischen den Rahmen 2 seitliche Durchgangsöffnungen 7 gebildet, welche es den Bienen ermöglicht, von der Seite in das Innere der Rahmen 2 zu gelangen. Die Vertiefungen 6 können auch als längliche Schlitze ausgestaltet sein.

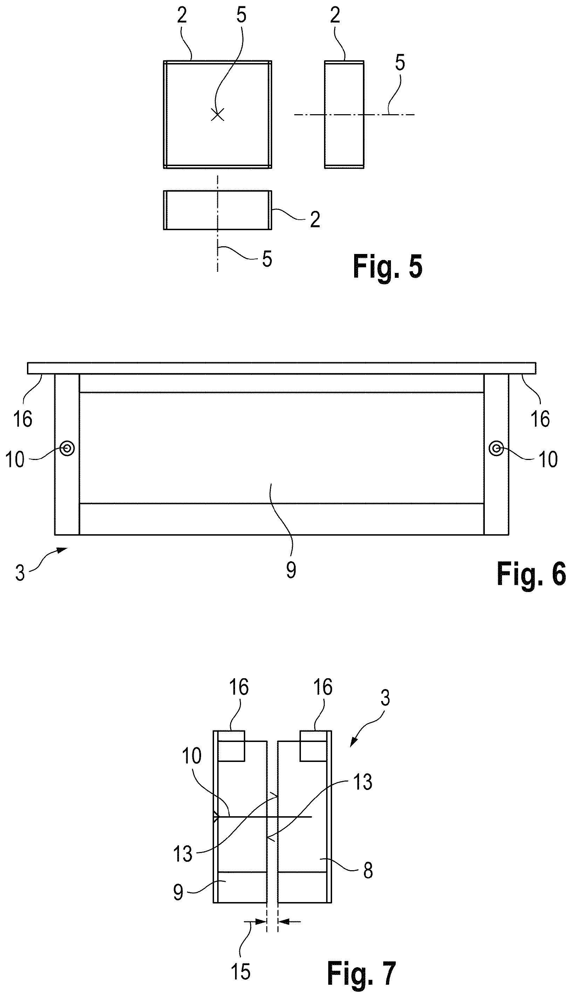

In der vorliegenden Variante sind die Rahmen in einer Draufsicht quadratisch geformt (siehe auch die Figur 5). Es sind, wie oben bereits beschrieben, auch andere Formen möglich, insbesondere auch runde oder abgerundete Formen.

Die Fassungsvorrichtung 3 umfasst eine erste Halterung 8, eine zweite Halterung 9 und mindestens ein, in den Figuren 1 und 2 nicht gezeigtes Befestigungsmittel 10 zur lösbaren Befestigung der ersten Halterung 8 und der zweiten Halterung 9 miteinander. Die erste Halterung 8 und die zweite Halterung 9 können spiegelsymmetrisch zueinander und nahezu baugleich aufgebaut sein. Jede der Halterungen 8 und 9 weist eine Innenseite 11, eine Außenseite 12 und einen die Innenseite 11 und die Außenseite 12 miteinander verbindenden Rand 13 auf, wobei durch die Innenseite 11 ausgehend von dem Rand 13 eine Vertiefung 14 gebildet wird. Die Vertiefung 14 ist zur zumindest teilweise formschlüssigen und derartigen aneinandergereihten Aufnahme der Mehrzahl an Rahmen 2 ausgebildet ist, dass die Mittelachsen 5 der Rahmen 2 parallel zueinander verlaufen bzw. zusammenfallen oder eine gemeinsame Mittelachse 5 bilden, und eine Rahmenaußenoberfläche jedes Rahmens 2 zumindest teilweise an der Innenseite 11 der Halterung 8, 9 anliegt.

In einem zusammengebauten Zustand der Anordnung 1 sind die Innenseiten 11 der ersten 8 und der zweiten Halterung 9 einander zugewandt, also auf einander zu gerichtet, angeordnet und die Mehrzahl an Rahmen 2 ist zwischen der ersten 8 und der zweiten Halterung 9 angeordnet, vorzugsweise eingeklammert oder lösbar fixiert oder eingeklemmt. Die Halterungen 8 und 9 sind im zusammengebauten Zustand lösbar miteinander befestigt. Dabei weisen die Ränder 13 der Halterungen 8 und 9 zumindest teilweise, vorzugsweise entlang des gesamten Umfangs der Ränder 13 einen Abstand 15 (siehe Figuren 4 und 7) zueinander auf.

Anstelle der gezeigten kastenförmigen Ausgestaltung der Halterungen 8 und 9 ist auch eine halbschalenförmige Gestaltung möglich. Dies bietet sich insbesondere dann an, wenn runde oder gekrümmte oder ovale Rahmen 2 verwendet werden. In diesem Fall können die Halterungen 8 und 9 aus verformbarem Material, beispielsweise Kunststoff, gefertigt werden und an die Form der Rahmen 2 angepasst sein. Es ist in diesem Fall auch möglich, Holz für die Halterungen zu verwenden und dieses durch entsprechende Verfahren angepasst an die Rahmen 2 zu verformen, insbesondere zu biegen.

In dem gezeigten Beispiel weisen die erste Halterung 8 und die zweite Halterung 9 jeweils seitliche Vorsprünge 16, z. B. in Form von Trägerleisten, auf. Diese dienen zum Positionieren und Einhängen der erfindungsgemäßen Anordnung 1 in eine Bienenbeute. Sowohl die Form und die Abmessungen der Vorsprünge 16 als auch die Länge und die Breite der Halterungen 8 und 9 können an einzelne oder mehrere verschiedene Stockmaße angepasst sein oder an mehrere Stockmaße flexibel anpassbar ausgestaltet sein. Anstelle der Vorsprünge 16 können auch andere Mittel zum Positionieren der Anordnung 1 in einer Bienenbeute verwendet werden, beispielsweise auch Haken oder ähnliches.

Die Figur 4 zeigt schematisch eine Fassungsvorrichtung 3 einer erfindungsgemäßen Anordnung 1 zur Produktion von Wabenhonig im zusammengebauten Zustand in einer Seitenansicht. Die Mehrzahl an Rahmen 2 kann selbstverständlich zwischen den gezeigten Halterungen 8 und 9 platziert sein. Die Rahmen sind zur besseren Übersichtlichkeit jedoch nicht gezeigt. Ihre Anordnung ergibt sich bereits aus den Figuren 1 bis 3. In der Figur 4 ist erkennbar, dass die Halterungen 8 und 9 im zusammengebauten Zustand durch Befestigungsmittel 10 so miteinander lösbar verbunden und aneinander befestigt werden, dass sich zwischen dem Rand 13 der ersten Halterung 8 und dem Rand 13 der zweiten Halterung 9 ein Abstand 15 ausbildet. Dieser Abstand 15 dient dazu, Bienen den Zugang zu den Rahmen 2 zu gewährleisten. Dazu liegt der Abstand 15 vorzugsweise zwischen 6 und 12 mm, beispielsweise zwischen 7 und 9 mm.

In dem gezeigten Beispiel ist als Befestigungsmittel 10 ein Metallstift mit einem Außengewinde, beispielsweise in Form einer Holzschraube, verwendet worden. Selbstverständlich können alternative Befestigungsmittel, wie zum Beispiel Bolzen oder Schrauben in Verbindung mit Muttern oder Steckverbindungen oder Klemmverbindungen verwendet werden. Entscheidend ist, dass das Befestigungsmittel 10 eine lösbare Verbindung bietet.

Die Figur 5 zeigt schematisch ein Beispiel für einen quadratisch geformten Rahmen 2 oder eine Kassette einer erfindungsgemäßen Anordnung 1 zur Produktion von Wabenhonig in einer Draufsicht (oben links) und zwei Seitenansichten.

Die Figur 6 zeigt schematisch die in der Figur 4 gezeigte Fassungsvorrichtung 3 in einer Ansicht von unten bezogen auf die Ansicht in der Figur 4. Die Figur 7 zeigt schematisch die in den Figuren 4 und 6 gezeigte Fassungsvorrichtung 3 in einer weiteren Seitenansicht. Im in eine Bienenbeute eingehängten Zustand würde es sich in der Figur 4 um eine Ansicht von oben und in den Figuren 6 und 7 um die Seitenansichten handeln.

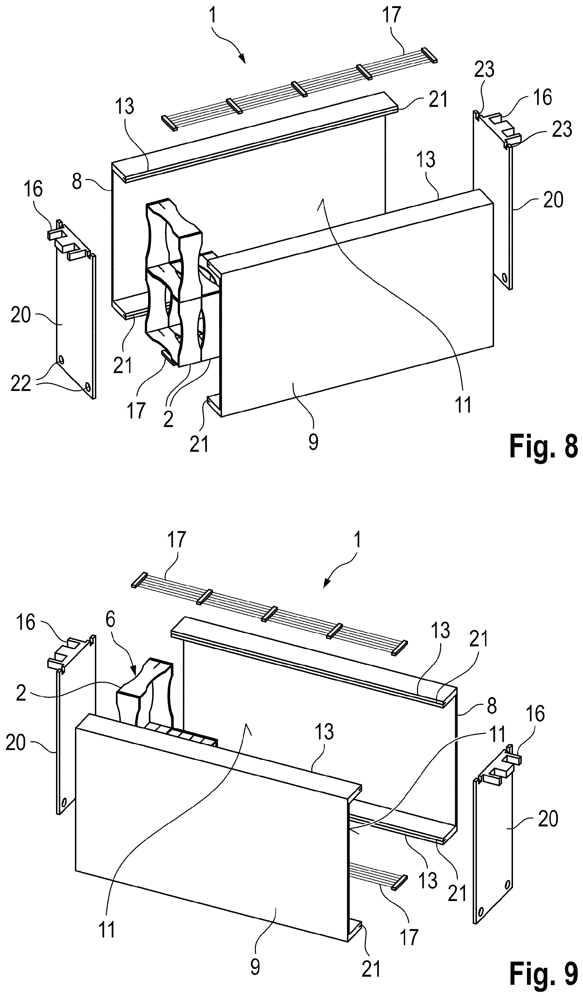

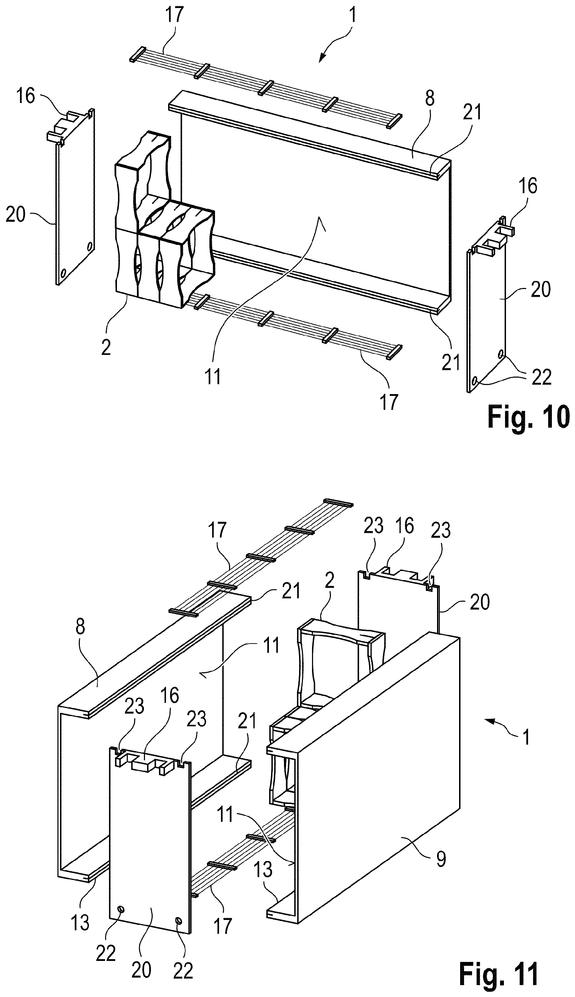

Im Folgenden wird anhand der Figuren 8 bis 11 eine zweite Ausführungsvariante einer erfindungsgemäßen Anordnung 1 zur Produktion von Wabenhonig beschrieben. Die vorliegende Ausführungsvariante unterscheidet sich von der zuvor beschriebenen ersten Ausführungsvariante im Wesentlichen in zweierlei Hinsicht.

Zunächst ist jeweils an den Rändern 13 der ersten Halterung 8 und der zweiten Halterung 9 ein in Längsrichtung verlaufender Schlitz 21, z. B. in Form einer Nut, vorgesehen. Dieser dient der Aufnahme eines Königinnen-Absperrgitters 17. Im zusammengebauten Zustand ist ein erstes (oberes) Absperrgitter 17 in den oberen Schlitz 21 im Rand 13 der ersten Halterung 8 und gleichzeitig auf der gegenüberliegenden Seite in den oberen Schlitz 21 im Rand 13 der zweiten Halterung 9 eingeführt, sodass das Absperrgitter 17 den oberen Rand 13 der ersten Halterung 8 mit dem oberen Rand 13 der zweiten Halterung 9 verbindet. Auf die gleiche Weise ist ein zweites (unteres) Absperrgitter 17 in den entsprechenden unteren Schlitzen 21 der ersten Halterung 8 und der zweiten Halterung 9 angeordnet. Auf diese Weise ist der Abstand 15 zwischen den Rändern 13 der ersten Halterung 8 und der zweiten Halterung 9 durch das Absperrgitter 17 gefüllt. Dies ermöglicht Arbeiter-Bienen den Zugang zu dem Inneren der Fassungsvorrichtung 3 und damit zu den Rahmen 2 und verhindert gleichzeitig einen Zugang der Königin zu diesem Bereich, insbesondere zu den auszubauenden Rahmen 2.

Ein zweiter Unterschied zu der ersten Ausführungsvariante besteht darin, dass stirnseitig zwei Seitenwände 20 als Befestigungsvorrichtung zur lösbaren Befestigung der ersten Halterung 8 und der zweiten Halterung 9 miteinander vorgesehen sind. Hierzu weisen die Seitenwände 20 zum Beispiel im unteren Bereich Durchgangslöcher 22 mit einem sich verjüngenden Durchmesser zum Fixieren von dazu korrespondierenden, an den Halterungen 8 und 9 seitlich angebrachten Stiften auf. Zusätzlich weisen die Seitenwände 20 in dem gezeigten Beispiel an ihrem oberen Rand Vertiefungen 23 zum Einhängen von an den Halterungen 8 und 9 angebrachten Stiften auf. Auf diese Weise entsteht ein einfach zu handhabender Klick- und/oder Klemmverschluss, mit welchem sich die Halterungen 8 und 9 mit beispielsweise zwischen ihnen angeordneten Rahmen 2 und Absperrgittern 17 leicht lösbar fixieren lassen befestigen lassen. Selbstverständlich sind auch andere Befestigungsmittel möglich.

In der gezeigten Variante weisen die Seitenwände 20 jeweils Aufhängungseinrichtungen 16 auf, welche in dem vorliegenden Beispiel mit einem Klickverbindungsmechanismus ausgestattet sind und sich dadurch einfach und sicher in einer Bienenbeute Einhängen und Fixieren lassen. Die gezeigte Ausführungsvariante mit Seitenwänden 20 ermöglicht darüber hinaus eine einerseits materialsparende und andererseits durch eine entsprechende Materialauswahl der Seitenwände 20 besonders stabile Ausführung. Dabei können überwiegend die Seitenwände 20 an das insgesamt zu tragende Gewicht angepasst sein und die Halterungen 8 und 9 können gegebenenfalls mit entsprechend weniger Materialaufwand ausgestaltet sein.

Darüber hinaus ermöglicht die vorliegende Ausgestaltung eine Verwendung von identischen Halterungen 8 und 9 für eine Vielzahl an Stockmaßen.

Beispielhafte Stockmaße sind Zander, Frankenbeute, DN-Einheitsmaß, Dadant und viele mehr. Die Anpassung an das individuelle Stockmaß kann z. B. ausschließlich mittels der Seitenwände 20 erfolgen. Gegebenenfalls können die verwendeten Absperrgitter 17 hinsichtlich ihrer Breite an das jeweilige Beutenmaß angepasst sein. Darüber hinaus können zur Anpassung an die verwendeten Rahmengrößen Einlegeplatten in die Fassungsvorrichtung 3 eingebracht oder integriert werden, um möglicherweise entstehenden Freiraum zur Vermeidung von Wildbau aufzufüllen. Zusätzlich oder alternativ dazu können in ihrer Geometrie und Anmessung an den auszufüllenden Raum angepasste Rahmen oder Kassetten zum Ausbau durch die Bienen in die Fassungsvorrichtung 3 eingebracht oder integriert werden. Dies hat den Vorteil, dass für beliebige Stockmaße der verfügbare Raum effizient zum qualitativ hochwertigen Honigausbau genutzt werden kann.

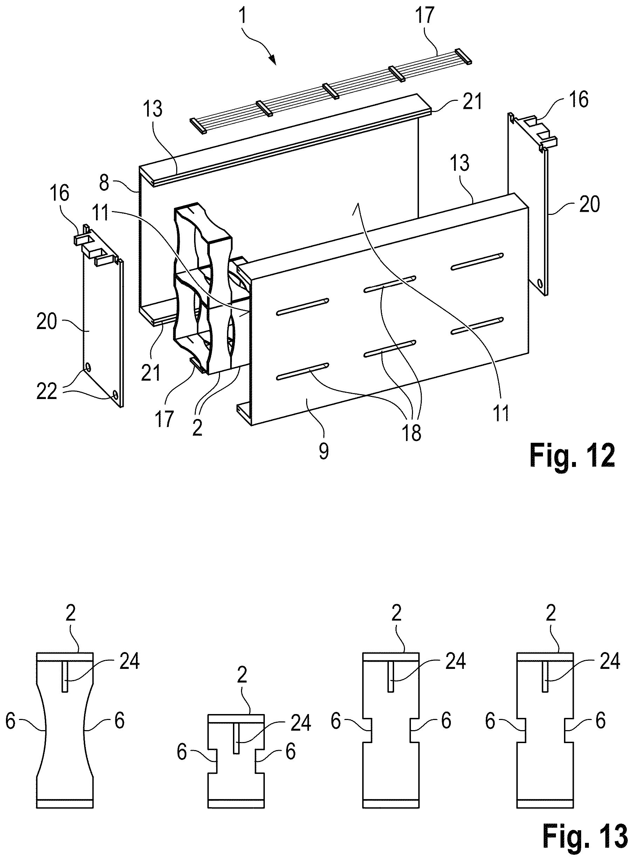

Eine dritte Ausführungsvariante ist schematisch in der Figur 12 gezeigt. Diese unterscheidet sich von der zuvor beschriebenen zweiten Ausführungsvariante lediglich dadurch, dass in einer oder beiden der Halterungen 8 und/oder 9 Durchgangsöffnungen 18 angeordnet sind. Diese haben in der gezeigten Variante die Form von länglichen Schlitzen 18. Diese Schlitze 18 dienen dazu, möglichst ausschließlich den Arbeiter-Bienen einen Zugang zu den Rahmen 2 zu ermöglichen. Hierzu sind die Schlitze 18 so bemessen, dass ihre minimale Ausdehnung zwischen 2,5 mm und 12 mm, insbesondere zwischen 4,5 mm und 8 mm, vorzugsweise zwischen 5 mm und 7 mm, liegt. Die Ausdehnung kann an die Art der verwendeten Bienen angepasst sein. Weiterhin kann die Ausdehnung auch so bemessen sein, dass sie anderen Insekten, wie z. B. Hummeln oder Wespen, den Zugang verwehrt. Alternativ zu den gezeigten Schlitzen 18 können auch runde, ovale, rechteckige oder quadratische Öffnungen vorgesehen sein. Entscheidend ist dabei, dass sie geeignete Abmessungen aufweisen, die einen Zugang der Königin zu den Rahmen 2 verhindern.

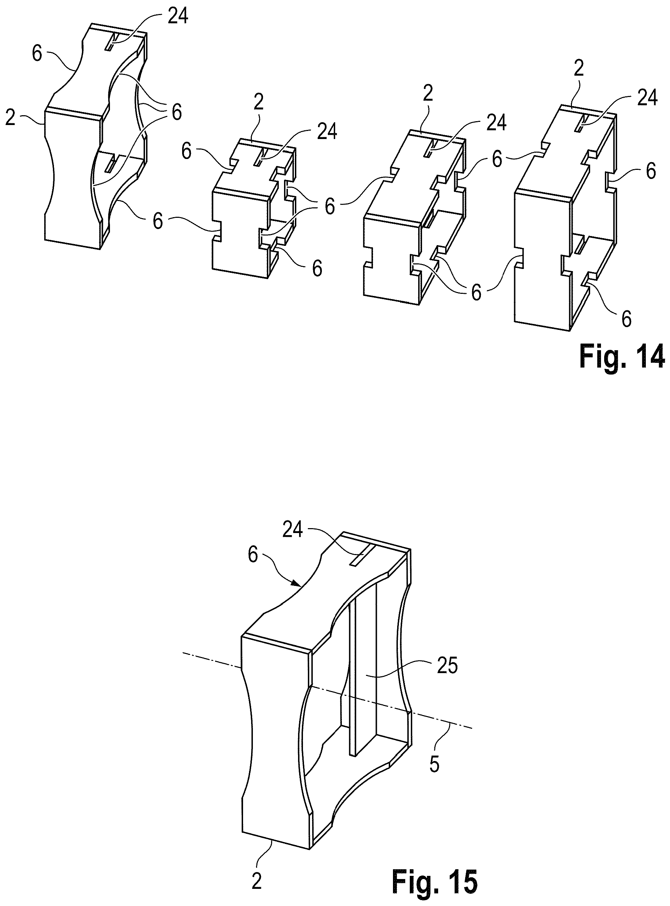

Die Figuren 13 bis 15 zeigen verschiedene Rahmen 2. Dabei sind in der Figur 13 vier unterschiedliche Rahmen 2 in einer Seitenansicht gezeigt. Die in der Figur 13 gezeigten Rahmen 2 sind in der Figur 14 in einer perspektivischen Ansicht gezeigt. Der in den Figuren 13 und 14 jeweils ganz links gezeigte Rahmen 2 weist eine gekrümmte Vertiefung 6 auf, beispielsweise mit einem konstanten Krümmungsradius. Die anderen drei Rahmen 2 weisen jeweils rechteckige Vertiefungen 6 auf. Alle vier gezeigten Rahmen 2 weisen Schlitze 24 auf, welche zum Fixieren von Anfangsstreifen 25 ausgelegt sind. Ein Rahmen 2 mit einem darin angeordneten Anfangsstreifen 25 ist in der Figur 15 in einer perspektivischen Ansicht gezeigt.

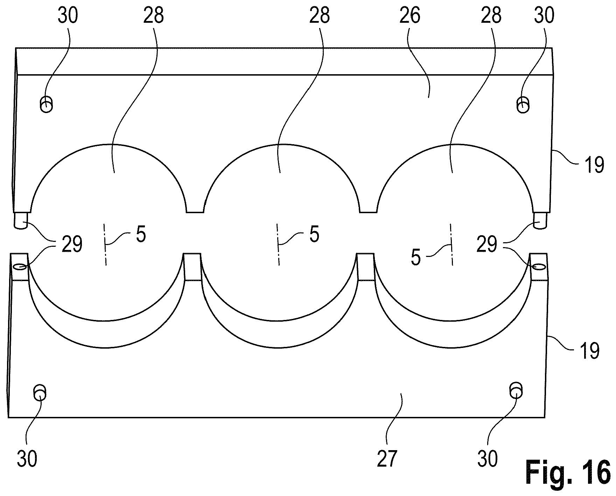

Die Figur 16 zeigt schematisch eine Inlay-Halterung 19 in einer perspektivischen auseinandergebauten Ansicht oder Explosionsansicht. Die Inlay-Halterung 19 umfasst ein erstes Bauteil 26 und ein zweites. Bauteil 27, welche die Inlay-Halterung 19 längs in zwei Hälften teilt. Die beiden Bauteile oder Hälften 26 und 27 weisen Befestigungsmittel 29 auf, welche eine lösbare Verbindung der beiden Bauteile 26 und 27 miteinander ermöglicht. Die Befestigungsmittel 29 sind in der gezeigten Variante als Steckverschluss ausgestaltet. Hier sind selbstverständlich auch andere Lösungen möglich.

Im zusammengebauten Zustand weist die gezeigte Inlay-Halterung 19 Durchgangslöcher 28 auf. Die Durchgangslöcher 28 sind in ihrer Geometrie an die Außengeometrie von vorgegebenen Rahmen 2 angepasst und dienen als Einspannöffnungen. In dem gezeigten Beispiel sind drei runde Durchgangslöcher 28 zur Aufnahme von korrespondierenden runden Rahmen 2 vorgesehen. Die Mittelachsen 5 der Durchgangslöcher oder Einspannöffnungen 28 entsprechen den Mittelachsen 5 von in die Durchgangslöcher 28 eingebrachten, vorzugsweise eingeklemmten, Rahmen 2.

Die Inlay-Halterung 19 ist dazu ausgelegt, in Längsrichtung zwischen der ersten Halterung 8 und der zweiten Halterung 9 der Fassungsvorrichtung 3 einer erfindungsgemäßen Anordnung 1 angeordnet zu werden. Zur Gewährleistung eines optimalen Zugangs für die Bienen zu den in der Inlay-Halterung 19 ein gespannten Rahmen 2 sind seitlich Abstandshalter 30 vorgesehen, welche den erforderlichen Abstand der Inlay-Halterung 19 bzw. der darin ein gespannten Rahmen 2 zu den Innenseiten 11 der Halterungen 8 und 9 gewährleisten. Die Inlay-Halterung 19 ermöglicht es, in eine quaderförmig ausgestaltete Fassungsvorrichtung 3, z. B. eine Standard-Fassungsvorrichtung gemäß der vorliegenden Erfindung, Rahmen 2 mit einer beliebig geformten Geometrie einzubringen und durch Bienen qualitativ hochwertig ausbauen zu lassen. Durch die beschriebene Ausgestaltung der Inlay-Halterung wird ein möglicher Wildbau durch die Bienen reduziert oder vermieden. Weiterhin bietet die Inlay-Halterung eine im Vergleich zu üblichen Lösungen deutlich erhöhte Flexibilität in Bezug auf das Design der verwendbaren Rahmen.

### Bezugszeichenliste:

- 1: Anordnung zur Produktion von Wabenhonig
- 2: Rahmen
- 3: Fassungsvorrichtung
- 4: Durchgangsöffnung des Rahmens
- 5: Mittelachse
- 6: Vertiefung
- 7: seitliche Durchgangsöffnung
- 8: erste Halterung
- 9: zweite Halterung
- 10: Befestigungsmittel
- 11: Innenseite
- 12: Außenseite
- 13: Rand
- 14: Vertiefung
- 15: Abstand
- 16: Vorsprung, Trägerleiste, Aufhängungsvorrichtung
- 17: Königinnen-Absperrgitter
- 18: Durchgangsöffnung
- 19: Inlay-Halterung
- 20: Befestigungsmittel / Seitenwand
- 21: Schlitz
- 22: Befestigungsmittel
- 23: Befestigungsmittel
- 24: Schlitz zur Aufnahme von Anfangsstreifen
- 25: Anfangsstreifen
- 26: erstes Bauteil
- 27: zweites Bauteil
- 28: Einspannöffnung
- 29: Befestigungsmittel
- 30: Abstandshalter

## Patentansprüche

1. Anordnung (1) zur Produktion von Wabenhonig, welche eine Mehrzahl an Rahmen (2) und eine Fassungsvorrichtung (3) zum Aufnehmen der Mehrzahl an Rahmen (2) umfasst, wobei die Rahmen (2) jeweils eine durch den Rahmen (2) definierte Durchgangsöffnung (4) mit einer Mittelachse (5) aufweisen,
**dadurch gekennzeichnet, dass**
die Fassungsvorrichtung (3) eine erste Halterung (8), eine zweite Halterung (9) und mindestens ein Befestigungsmittel (10, 20) zur lösbaren Befestigung der ersten Halterung (8) und der zweiten Halterung (9) miteinander aufweist, wobei jede der Halterungen (8, 9) eine Innenseite (11), eine Außenseite (12) und einen die Innenseite (11) und die Außenseite (12) miteinander verbindenden Rand (13) aufweist, wobei durch die Innenseite (11) ausgehend von dem Rand (13) eine Vertiefung (14) gebildet wird, welche zur Aufnahme der Mehrzahl an Rahmen (2) ausgebildet ist,
wobei in einem zusammengebauten Zustand der Anordnung (1) die Innenseiten (11) der ersten Halterung (8) und der zweiten Halterung (9) einander zugewandt angeordnet sind, die Mehrzahl an Rahmen (2) zwischen der ersten Halterung (8) und der zweiten Halterung (9) angeordnet sind und die Halterungen (8, 9) lösbar miteinander befestigt sind, wobei die Ränder (13) der Halterungen (8, 9) zumindest teilweise einen Abstand (15) zueinander aufweisen.

2. Anordnung (1) nach Anspruch 1,
**dadurch gekennzeichnet, dass**
die Rahmen (2) in axialer Richtung (5) mindestens eine Vertiefung (6) aufweisen und/oder die durch die Innenseite (11) ausgehend von dem Rand (13) gebildete Vertiefung (14) zur zumindest teilweise formschlüssigen und derartigen aneinandergereihten Aufnahme der Mehrzahl an Rahmen (2) ausgebildet ist, dass die Mittelachsen (5) der Rahmen (2) parallel zueinander verlaufen und eine Rahmenaußenoberfläche jedes Rahmens (2) zumindest teilweise an der Innenseite (11) der Halterung (8, 9) anliegt.

3. Anordnung (1) nach Anspruch 1 oder 2,
**dadurch gekennzeichnet, dass**
die Anordnung (1) mindestens eine Inlay-Halterung (19) umfasst, welche zur Aufnahme mindestens eines Rahmens (2) und zur Anordnung in der Fassungsvorrichtung (3) ausgebildet ist.

4. Anordnung (1) nach einem der Ansprüche 1 bis 3,
**dadurch gekennzeichnet, dass**
die Rahmen (2) jeweils in einer Ansicht in Richtung der Mittelachse (5) eine mehreckige Form oder eine gekrümmte Form oder eine ovale oder eine elliptische Form aufweisen.

5. Anordnung (1) nach einem der Ansprüche 1 bis 4,
**dadurch gekennzeichnet, dass**
die Fassungsvorrichtung (3) mindestens ein Königinnen-Absperrgitter (17) umfasst.

6. Anordnung (1) nach einem der Ansprüche 1 bis 5,
**dadurch gekennzeichnet, dass**
die erste Halterung (8) und/oder die zweite Halterung (9) mindestens eine Durchgangsöffnung (18) aufweist, welche eine Abmessung von mindestens 6 Millimetern bezüglich ihres Durchmessers und/oder ihrer Länge und Breite aufweist.

7. Anordnung (1) nach einem der Ansprüche 1 bis 6,
**dadurch gekennzeichnet, dass**
die geometrische Form der Innenseite (11) der ersten Halterung (8) und/oder der zweiten Halterung (9) und/oder der Inlay-Halterung (19) an die Form der Rahmen (2) angepasst ist und/oder anpassbar ausgestaltet ist.

8. Anordnung (1) nach einem der Ansprüche 1 bis 7,
**dadurch gekennzeichnet, dass**
mindestens eine der Halterungen (8, 9) halbschalenförmig oder kastenförmig ausgestaltet ist.

9. Anordnung (1) nach einem der Ansprüche 1 bis 8,
**dadurch gekennzeichnet, dass**
das mindestens eine Befestigungsmittel (10, 20) mindestens eine Schraubverbindung (10) und/oder mindestens eine Steckverbindung (23) und/oder mindestens eine Klemmverbindung (22) umfasst.

10. Anordnung (1) nach einem der Ansprüche 1 bis 9,
**dadurch gekennzeichnet, dass**
die Mehrzahl an Rahmen (2) und/oder die Fassungsvorrichtung (3) Holz und/oder Kunststoff umfasst und/oder in einem 3D-Druckverfahren hergestellt sind.

11. Anordnung (1) nach einem der Ansprüche 1 bis 10,
**dadurch gekennzeichnet, dass**
die Rahmen (2) jeweils eine Mittelwand oder einen Anfangsstreifen (25) umfassen.

12. Anordnung (1) nach einem der Ansprüche 1 bis 11,
**dadurch gekennzeichnet, dass**
in einem zusammengebauten Zustand der Anordnung (1) die Halterungen (8, 9) in mindestens einem Teilbereich oder entlang des gesamten Umfangs der Ränder (13) der Halterungen (8, 9) einen Abstand von mindestens 6 Millimetern und/oder maximal 12 Millimetern aufweisen.

13. Anordnung (1) nach einem der Ansprüche 1 bis 12,
**dadurch gekennzeichnet, dass**
die Rahmen (2) entlang ihres Umfangs sich parallel zur Mittelachse (5) erstreckende Vertiefungen (6) aufweisen, die so ausgestaltet sind, dass bei einer aneinander gereihten Anordnung von mindestens zwei Rahmen (2) mindestens eine sich in radialer Richtung bezüglich der Mittelachse (5) erstreckende Durchgangsöffnung (7) zu dem Inneren der Rahmen (2) ausgebildet wird, welche eine Abmessung von mindestens 6 Millimetern bezüglich ihres Durchmessers und/oder ihrer Länge und Breite aufweist.

14. Anordnung (1) nach einem der Ansprüche 1 bis 13,
**dadurch gekennzeichnet, dass**
die Fassungsvorrichtung (3) eine an mehrere Stockmaße anpassbare Einrichtung (16) zum Positionieren der Anordnung (1) in einer Bienenbeute aufweist.

15. Anordnung (1) nach einem der Ansprüche 1 bis 14,
**dadurch gekennzeichnet, dass**
die Fassungsvorrichtung (3) mindestens ein an einen Leerraum innerhalb der Fassungsvorrichtung (3) geometrisch angepasstes Füllelement und/oder mindestens einen an einen Leerraum innerhalb der Fassungsvorrichtung (3) geometrisch angepassten Rahmen (2) umfasst.
